(19) Europäisches Patentamt / European Patent Office / Office européen des brevets

(11) **EP 1 532 748 B1**

(12) **EUROPEAN PATENT SPECIFICATION**

(45) Date of publication and mention
of the grant of the patent:
**13.10.2010 Bulletin 2010/41**

(21) Application number: **03792554.2**

(22) Date of filing: **05.08.2003**

(51) Int Cl.:
**H04B 1/707** (2006.01)

(86) International application number:
**PCT/IB2003/003399**

(87) International publication number:
**WO 2004/019510 (04.03.2004 Gazette 2004/10)**

(54) **Delay line for multiple propagation paths reception**

Verzögerungsleitung für den Empfang von Mehrfachausbreitungswegen

Ligne à retard pour réception par des voies à propagation multiple

(84) Designated Contracting States:
**AT BE BG CH CY CZ DE DK EE ES FI FR GB GR HU IE IT LI LU MC NL PT RO SE SI SK TR**

(30) Priority: **21.08.2002 FR 0210452**

(43) Date of publication of application:
**25.05.2005 Bulletin 2005/21**

(73) Proprietor: **NXP B.V.**
**5656 AG Eindhoven (NL)**

(72) Inventors:
• **ARDICHVILI, Emmanuel**
  **F-75008 Paris (FR)**
• **FLORET, Christophe**
  **F-75008 Paris (FR)**

(74) Representative: **Schuffenecker, Thierry et al**
**120 Chemin de la Maure**
**06800 Cagnes sur Mer (FR)**

(56) References cited:
**EP-A- 1 075 090     EP-A- 1 162 755**

**Description**

The present invention relates to a receiver for receiving an input signal comprising a series of samples, said receiver comprising one delay line. The invention also relates to a method of delaying such input signals. '

The invention finds a particular application notably in mobile telephones defined by the UMTS standard.

According to the UMTS standard ("3GPP standard, release 99") determined by the ETSI group, when an initial signal is transmitted by a base station it is subjected to multiple reflections, diffractions and attenuations. These phenomena are caused by obstacles of the environment such as buildings or mountains; the consequence is the existence of multiple propagation paths and copies of the initial signal of variable power. Thus the initial signal may take more or less time to arrive at the receiver of the mobile telephone as a function of the route it takes. For that matter, the receiver may also receive a signal composed by the superpositioning of various signals coming from two different base stations of different propagation paths and comprising the same transmit information.

At the receiver end the input signal is sampled at a frequency of 15.36 MHz. The receiver is thus to be able to identify and separate the various samples of the copies of the received signal that correspond to the multiple paths so as to recombine them in a coherent manner to find back the common information or the initial input signal. The input signal is thus to be delayed until its last copy has arrived to be able to sum all the copies together in a coherent manner so as to find back the desired information. For this purpose United States patent US 2001/0002919 describes a receiver comprising a demodulator that permits to demodulate the samples into data called symbols and a delay line in which a delay equal to the delay difference between said symbol and the last received symbol is applied to each symbol. In order to take the worst case into account, the delay line has a number of samples so that this number multiplied by the inverse of the sample frequency is equal to the maximum time existing between a first and a last received symbol (all the paths being taken into account).

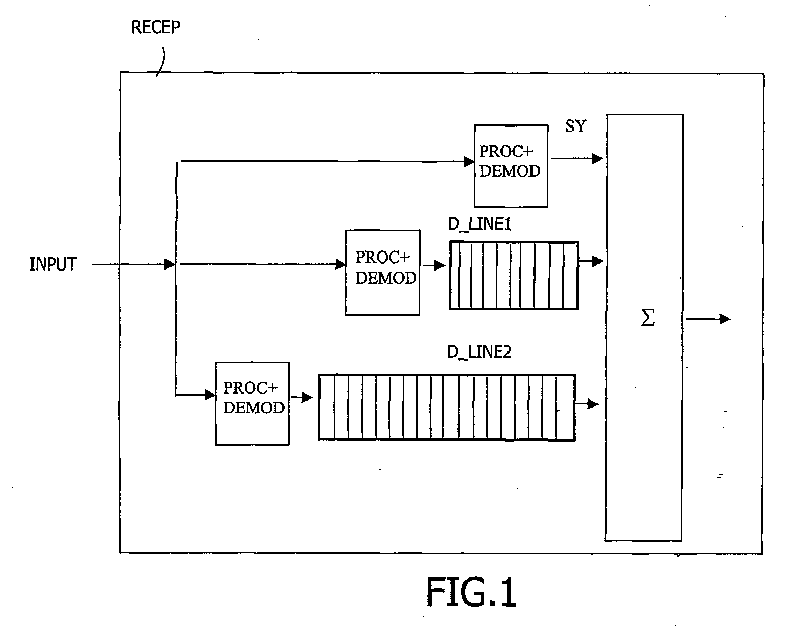

Although this prior art permits a management of the multiple paths, various delay lines are necessary, that is M-1, if M paths are to be processed as shown in Fig. 1. Moreover, this considerable number of lines is costly in terms of energy consumption and silicon surface for the receiver. Moreover, in the case where the number of paths would augment, it would be necessary to make a new design of the receiver to incorporates the new paths and take the new delays between the various shifted input signals into account.

Consequently, a technical problem to be resolved by an object of the present invention is to propose a receiver for receiving an input signal that comprises a series of samples, said receiver comprising a delay line, as well as a method of delaying an input signal, which permit to process multiple paths in a high-performance way and this without utilizing costly systems in terms of energy consumption and silicon surface.

A solution to the technical problem posed is characterized according to a first object of the present invention in that the delay line is intended to delay said input signal by a series of delays and is divided into a series of delay sub-lines each intended to write one from the series of samples of said input signal, and in that the delay line comprises control means intended to generate read addresses for the samples in the delay sub-lines from the series of samples of the input signal, so that a read address is equal to a difference between a write address of a sample in a delay sub-line of the input signal and a delay expressed as a number of sampling periods from the series of delays.

According to a second object of the present invention this solution is **characterized in that** the delay method comprises the steps of:

- dividing the delay line into a series of delay sub-lines each intended to receive a sample from the series of samples of the input signal, said delay line being intended to delay said input signal by a series of delays, and
- generating read addresses of the samples in the delay sub-lines from the series of samples of the input signal, so that a read address is equal to a difference between a write address of a sample in a delay sub-line of the input signal and a delay expressed as a number of sampling periods of the series of delays.

Thus, as will be seen in more detail hereinafter, a simple means is utilized for defining the delays to be applied to the various samples by utilizing only a single delay line.

Advantageously, each of the delay sub-lines is accessible with a frequency twice as fast as the samples of the input signal received by the receiver. In this way, it will be possible to read various samples corresponding to various copies of an input signal, so that multiples of propagation paths can be generated via a single delay line.

For that matter, read addresses of the samples from a series of samples are advantageously immediately adjacent to addresses or equal to one another. This permits to easily read all the samples of a series in parallel.

Moreover, the delay line advantageously comprises a position factor indicating the position of a sample from the series of samples of an input signal in the delay sub-line. According to the values adopted by this position factor, it will be known to which delay sub-line a sample from the series of samples of an input signal belongs.

These and other aspects of the invention are apparent from and will be elucidated, by way of non-limitative example, with reference to the embodiment(s) described hereinafter.

In the drawings:

- Fig. 1 illustrates in a diagrammatic manner a receiver with delay lines according to the prior art,
- Fig. 2 illustrates a receiver with a delay line according to the invention,
- Fig. 3 is a first embodiment of the delay line of the receiver of Fig. 2,
- Fig. 4 is a time line showing read and write accesses of samples in the delay line according to the first embodiment of Fig. 3,
- Fig. 5 shows a distribution of samples in memory areas of the delay line according to the first embodiment of Fig. 3,
- Fig. 6 shows an addressing of the memory areas of Fig. 5,
- Fig. 7 is a second embodiment of the delay line of the receiver of Fig. 2,
- Fig. 8 is a time line showing the read and write accesses of samples in the delay line according to the second embodiment of Fig. 7,
- Fig. 9 illustrates a distribution of samples in the memory areas of the delay line according to the second embodiment of Fig. 7,
- Fig. 10 illustrates accesses to memory areas of the delay line according to the second embodiment of Fig. 7,
- Fig. 11 shows read and write accesses to memory areas of the delay line according to the second embodiment of Fig. 7,
- Fig. 12 shows regroupings of read and write accesses to memory areas of the delay line according to the second embodiment of Fig. 7,
- Fig. 13 illustrates a selection of a set of memory areas of the delay line according to the second embodiment of Fig. 7, and
- Fig. 14 is a first variant of embodiment of the delay line according to the second embodiment of Fig. 7.

In the description that follows, the functions or structures well known to a man of skill in the art will not be described in detail because they would unnecessarily be a hindrance for the description.

The present description of the invention relates to an example of a receiver RECEP utilized in the domain of mobile telephony and notably integrated in a portable telephone, which is also called a mobile. The receiver RECEP operates according to the UMTS standard.

According to this standard a receiver RECEP is to be capable of managing at most 6 propagation paths FING corresponding to 6 copies of an input signal INPUT containing the same information, the copies coming from 6 different base stations or corresponding to 6 copies coming from a same initial signal transmitted by a single base station and being shifted in time and having variable power.

At the receiver end RECEP each received signal is demodulated in the baseband and then sampled by an analog/digital converter with a frequency of 15.36 MHz i.e. a data DATA currently called chip quarter of such a signal comprises a series of samples S. The various samples are presented in a manner known to a man of skill in the art in the imaginary I or real Q form. There are 4 chip quarters per received input signal corresponding to a path FING.

To find back the common information on the basis of the received input signal INPUT, the receiver RECEP is to recover the copies of this signal and then manage them in parallel. More particularly, the various samples S of the received input signal are to be identified and separated so as to recombine them in a coherent manner to recover the common information and this in order to improve the receiving quality of the common information. Also said receiver RECEP is to wait for the reception of the last copy of the input signal INPUT to commence its recovery operation. Thus all the copies of the input signal INPUT are to be delayed until the last copy has been received.

It will be noted that while it is a given fact that the received samples S comprise x copies of the same information shifted in time. As a result of this fact said samples may belong to an arbitrary path. What will differentiate them will be the delay applied to the input signal. Thanks to this delay it will be possible to know to which copy of the input signal and thus to which path FING such and such sample belongs.

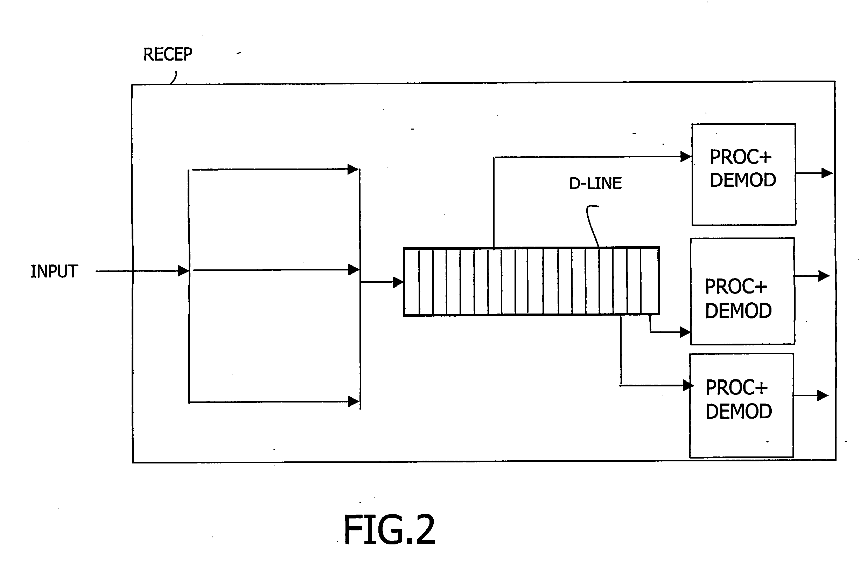

In order to be able to manage 6 paths, according to a first non-limiting embodiment as shown in Fig. 2 the receiver RECEP comprises:

- one delay line D_LINE for delaying the input signal INPUT, and
- a plurality of management units PROC+DEMOD in parallel with the samples coming from the delay line D_LINE.

These two elements are comprised in an integrated circuit of the receiver RECEP.

It will be noted that the receiver RECEP operates with a clock frequency CLK of 15.36 MHz.

A series of samples generally comprises four samples of which:

- a first sample IN TI1VIE called reference sample is the sample that is supposed to possess the most energy,
- a second sample called preceding sample EARLY which is situated just before the first sample IN_TIME,

- a third sample called next sample LATE which is situated just after the second, and
- a fourth sample VOID.

For reasons of efficiency when capturing the samples, for each chip quarter the first three samples described above called useful samples will be taken into account for the energy calculations for a given path.

It is supposed that a sample enters a delay line D LINE with each clock cycle CLK. In that case it is necessary to write with each clock cycle, that is, to write 4 samples at 4 successive addresses every 4 clock cycles CLK, and read 18 samples (3 for 6 paths FING) every 4 clock cycles CLK, the samples being read with the same timing as they are being written.

It will be noted that the constraint posed is to obtain at the output of the delay line D_LINE a sample chosen from 4 samples, that is, to obtain a sample with a frequency of 3.84 MHz.

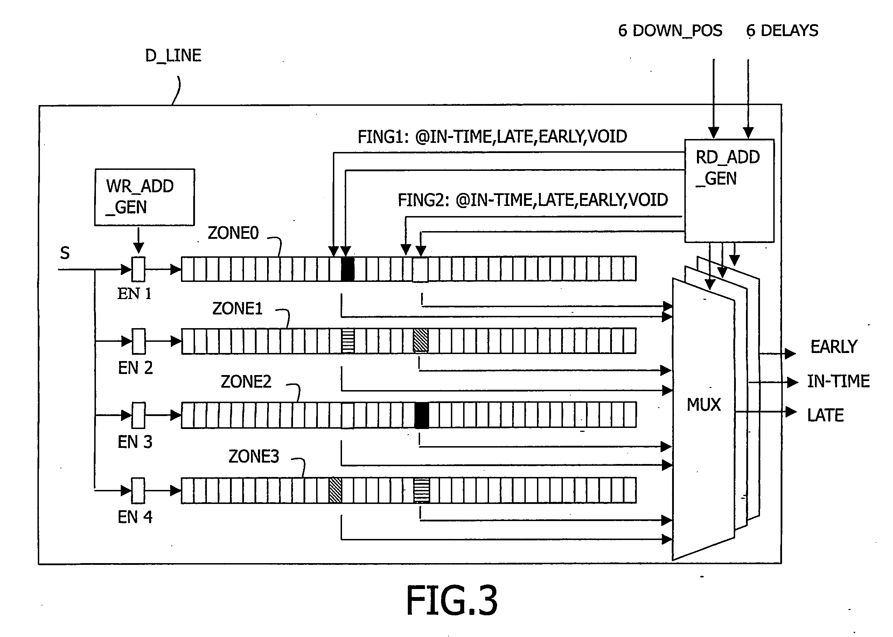

For this purpose the delay line D_LINB preferably comprises, as illustrated in Fig. 3:

- a write address generator WR_ADD_GEN intended to generate write addresses in the memory of the delay line D_ LINE for the samples from a series of samples,
- control means RD_ADD_GEN intended to generate read addresses for the samples in the delay line D_LRTE from the' series of samples of an input signal,
- 3 multiplexers MUX, and
- 4 write registers REG.

Moreover, the delay line D_LINE is advantageously divided into a series of delay sub-lines ZONE, four in this case, the same number as the number of samples in a series of samples. Each delay sub-line ZONE is intended to write a sample from the series of samples IN_TIME, EARLY, LATE, VOID of an input signal INPUT.

Preferably a series of four memory areas is associated with the series of the four delay sub-lines ZONE. These 4 memory areas are preferably single-port 512*12 bits volatile RAM memories.

All the delay sub-lines ZONE are read in parallel and 6 read accesses are made every 4 cycles. Advantageously, each memory area is accessible 2 times with each clock cycle CLK, either with an access frequency that is twice as fast as that with which the receiver RECEP receives the samples of an input signal, or here with a constant frequency of 30.72 MHz.

It will be noted that the fact of having such memory areas in lieu of conventional switches forming the delay sub-lines offers the advantage of utilizing less place in the circuit of the receiver. Actually, 512*12*4 switches would be necessary to obtain the same result.

The management of the series of samples S of input signals INPUT takes place in the following manner.

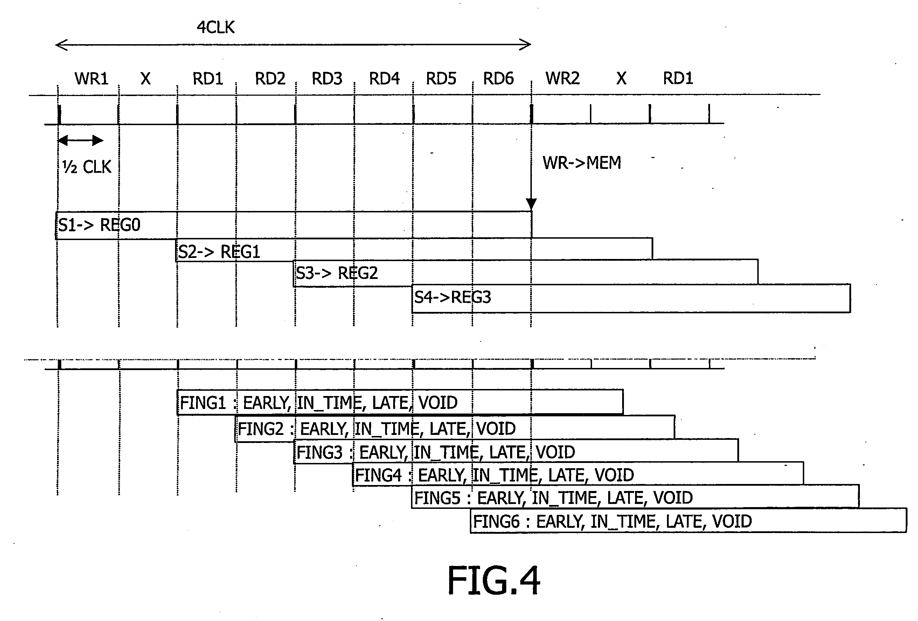

**In a first step1)**, when a series of samples S arrives at the delay line D_LINE, a quarter chip per clock cycle CLK, for example 4 samples S1, S2, S3, S4, they are written in the 4 write registers REG0, REG1, REG2 and REG3 as is shown in Fig. 4. These four samples, corresponding to a complete chip, are potentially useful for each of the paths FING under consideration. Thus for a given path FING, among these four samples there are useful samples IN_TIME, EARLY and LATE situated at a position indeterminate for the moment. The write registers REG store in the memory the samples received during 4 clock cycles CLK. This permits to have as a consequence synchronized write or read accesses for all the delay sub-lines ZONEO to ZONE3.

**In a second step 2)**, when the last sample S4 has been received, the write address generator WR_ADD_GEN generates 4 write addresses ADD, one for each of the delay sub-lines ZONEO to ZONE3, and the 4 samples S1 to S4 are written (WR2) in each of the delay sub-lines ZONEO to ZONE3. The writing WR2 takes place at half a clock cycle CLK.

It will be noted that with the memory area associated with a delay sub-line having a size of 512*12 bits, each delay sub-line ZONE is written at a same address in a cyclic manner every 512 clock cycles CLK.

More precisely the write address generator WR_ADD_GEN is a counter which is incremented each time 4 samples S are written in the registers REG respectively and which generates in cyclic manner 4 activation commands EN1, EN2, EN3 and EN4 for writing said samples S in the delay sub-lines ZONE as shown in Fig. 3. It will be noted that an address pointer WR_PTR is used for writing the samples S at the associated addresses and is incremented with each writing until it has reached the end of the 4 memory areas ZONE simultaneously. In the end said pointer comes back to the start of the areas.

**In a third step 3)**, the series of samples is read so that the first sample IN_TIME of this series has a delay τ on the output relative to the input which delay represents the delay associated with a path FING each delay associated with a path FING being known to a receiver RECEP. A read pointer RD_PTR is used for reading the samples. This pointer is cyclic just like the write pointer WR_PTR.

It will be noted that a series of samples may belong to an arbitrary input signal INPUT and thus path FING, because they carry the same information. It is the applied delay that determines the path FING to which a series of samples belongs.

Thus for each first received sample IN_TIME there is a read address @RD equal to its write address @WR minus the delay τ associated with the corresponding path FING, modulo-512, a delay τ being expressed as a number of sampling periods.

The control means RD_ADD_GEN which are in practice a read address generator permits to generate these read addresses so that they are equal to a difference between a write address of a sample in the delay sub-lines ZONE of the input signal and the delays τ applied to the input signal.

It will be noted that in the application described the clock CLK has a frequency of 15.36 MHz, thus the sampling period is Tech = about 65 ns. If a delay of 650 ns is desired, for example, the value of a delay τ expressed as a number of sampling periods will be 10.

According to that which precedes there is:

$$@RD = (@W - \tau) \text{ modulo-512.}$$

Advantageously, the preceding and following examples EARLY, LATE, are written at addresses ADD that differ from that of the first sample IN_TIME only by +1 or -1, i.e. the 3 useful samples of a chip are written at successive addresses.

Furthermore, it will be noted that, advantageously, a same delay sub-line ZONE does not comprise 2 samples coming from a same chip. For example, it will never be possible to have a first sample IN_TIME and the next sample LATE in a single delay sub-line ZONE i.e. in a single memory area ZONE. As a consequence, as will be seen hereinafter, it will be possible to read these three samples IN_TIME, EARLY and LATE in a single desired reading and sampling operation i.e. the one that has the largest energy will be selected by a multiplexer MUX and redirected to the corresponding path FING.

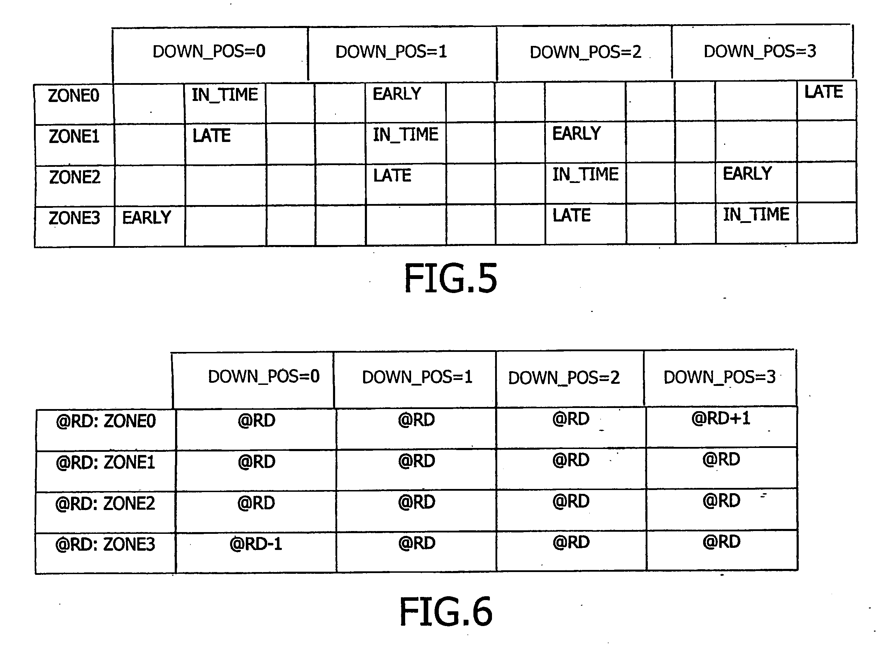

Figs. 5 and 6 show the read addresses ADD of the various samples according to the position taken by the reference sample IN_TIME in the delay line D_LINE.

The position of a reference sample IN_TIME is determined by a position factor DOWN_POS. Thus a value of the position factor DOWN_POS is associated with a memory area ZONE as shown in the following Table.

| DOWN_POS=0 | DOWN_POS=1 | DOWN_POS=2 | DOWN_POS=3 |
|---|---|---|---|
| ZONE0 | ZONE 1 | ZONE2 | ZONE3 |

Furthermore, the value of this same position factor DOWN_POS will determine the read addresses of the other two preceding and following samples EARLY and LATE relative to the address of the reference sample IN_TIME. The other two preceding and following samples EARLY and LATE will preferably be read at the same address or immediately adjacent address to that of said reference sample IN_TIME in their respective memory area ZONE. For example, in Fig. 6 it may be seen that when the position factor DOWN_POS is equal to 2 or 3, the other two samples EARLY and LATE are situated at read addresses @RD equal to the read address of the first sample IN_TIME. In the case where the position factor DOWN_POS is equal to 0, the preceding sample EARLY is found at a preceding address @RD-1 and the next sample LATE at a same read address @RD. Finally, when the position factor DOWN_POS is equal to 3, the preceding sample EARLY is found al a same address @RD and the next sample LATE at a next read address @RD+1.

Advantageously, the read addresses of the useful preceding and next samples EARLY and LATE have associated position factor values DOWN_POS which differ by +1 or -1 from the reference sample IN_TIME. This avoids having 2 useful samples in a same memory area ZONE.

In a practical manner, as illustrated in Fig. 3, the read address generator RD_ADD_GEN receives on its input 6 delay values τ corresponding to 6 paths FING and 6 different position factor values DOWN_POS associated with the 6 paths FING and generates 2 read addresses only instead of 3 because only 2 read addresses ADD are necessary for reading 3 samples as has been seen previously.

Thus as may be seen in Fig. 4, after the writing of the samples, during a first reading RD1, the 4 samples IN_TIME, EARLY, LATE and VOID corresponding to a first path FING1 will be read simultaneously in the 4 corresponding memory areas and that with half a clock cycle CLK, on the basis of 2 read addresses. In this example as shown in Fig. 3, the position factor DOWN_POS corresponding to the first path FING1 is equal to 0. The reference sample IN_TIME (in black in the Figure) is found in the first memory area ZONE0 at a current address @RD, the next sample LATE (horizontal hatching in the Figure) is found in the second memory area ZONE1 at the current address @RD, whereas the preceding sample EARLY (diagonal hatching in the Figure) is found in the fourth memory area ZONE3 at a preceding address @RD-1 of the current address @RD. The fourth sample VOID is also read and is found here in the third memory area ZONE2.

During a second reading RD2, the 3 samples IN_TIME EARLY and LATE corresponding to a second path FING2 will be read and this with half a clock cycle CLK from 2 addresses. In the example of Fig. 3 the position factor DOWN_POS corresponding to the second path FING2 is equal to 2. The reference sample IN_TIME (in black in the Figure) is found in the third memory area ZONE2 at a current address @RD, the next sample LATE (horizontal hatching in the Figure) is found in the fourth memory area ZONE3 at the same current address @RD and the preceding sample EARLY (diagonal hatching in the Figure) is found in the second memory area ZONE 1 also at the same address @RD. The fourth sample VOID (gray in the Figure) is also read and is found here in the first memory area ZONE0.

And so on for the samples IN_TIME, EARLY and LATE corresponding to 6 paths FING.

In 4 clock cycles CLK one writing and 6 readings have then been made in the delay line D_LINE. At the end of the last reading RD6, 24 samples will have been read.

At the next clock cycle the write step 2) and read step 3) commence again. Thus, for example, between two sample readings of a first path FING1, 8 half clock cycles CLK will have passed.

It will be noted that the position factor values DOWN_POS of samples associated with each path FING are determined by a rectification module (not shown) which calculates the energy of each sample read and consequently determines the sample that possesses the largest energy among the 3 useful samples read IN_TIME, EARLY and LATE. At this moment, according to its calculations, said rectification module will rectify the values of the position factors DOWN_POS which are entered in the read address generator RD_ADD-GEN so that the delay line D_LINE is correctly adjusted to the samples and provides the useful samples, that is the reference sample IN_TIME, the next sample LATE and the previous sample EARLY. For example, in the case of Fig. 3, if in the received samples of the second path FING2, it is in fact the previous sample EARLY that possesses the most energy, for the next reading of this second path FING2 this sample is readjusted and thus becomes the reference sample IN_TIME in that the value of the position factor DOWN_POS is set to 1. These calculations by the rectification module are made each time a series of samples is read.

It will be noted that in certain cases it will be necessary to change also the read address of a sample.

It will be noted that when the receiver RECEP receives the first four samples of any first path FING during an initialization step, the rectification module searches for the reference sample IN_TIME i.e. the one that has the most energy of the four and assigns a first value to the position factor DOWN_POS.

It will also be noted that in view of avoiding having a read pointer RD_PTR which would point at an address ADD and does not comprise a sample, advantageously one waits for the whole delay line D_LINE, that is all the memory areas ZONE, to be filled by samples. One then waits for 512 clock pulses CLK or chip quarters. To have a security margin one preferably waits for a period of 2560 chips, 2560 chips representing a unit called slot known to a man of skill in the art.

It will further be noted that the current read address @RD for a sample is situated approximately in the middle of the delay line D_LINE so that, if there are other paths that are received, the corresponding samples are always found in the delay line D_LINE. It will be noted that delay $\tau$ - 0 (writing and reading at the same time for a same sample) is not managed and neither is the delay $\tau = 512$ which represent extreme positions, because in these cases the write pointer WR_PTR and read pointer RD_PTR would point at addresses comprising non-valid samples.

**In a fourth step 4)**, the 4 samples read IN_TIME, EARLY, LATE and VOID are sent to three multiplexers MUX. The three multiplexers choose the reference sample IN_TIME, the preceding sample EARLY and the following sample LATE respectively as a function of the position factor DOWN_POS and sends them to a processor PROC of the management unit PROC_DEMOD of the receiver RECEP.

The steps 1 to 4 are recommenced for the other paths.

Having identified and separated all the various samples received of the 6 received input signals (that is 3 chips read for each path) according to the preceding steps, they are recombined in a coherent manner to recover the common information.

**In a fifth step 5)**, the processor PROC determines according to the energy the reference samples IN_TIME and according to the delay $\tau$ to which path FING each reference sample IN_TIME belongs, after which it sends each reference sample IN_TIME to a demodulator DEMOD associated with said path. Said demodulator DEMOD combines each sample IN_TIME with a code relating to the associated path FING. Subsequently, all the reference samples IN_TIME are summed up to find back the common information.

It will be noted that there is one demodulator DEMOD per path, that is 6 demodulators DEMOD. These demodulators process in parallel the samples IN_TIME of their respective path.

It will be noted that when the mobile moves away from a base station, the delays $\tau$ associated with the various paths FING may change. In order to take these changes into account there is a calculation module (not shown) of the delays associated with the paths which inputs the values of the updated delays $\tau$ into the delay line D_LINE. Such a module is well known to a man of skill in the art.

Thus, this first embodiment of the invention presents numerous advantages listed hereinafter.

Firstly, the delay line is simple to implement. It is based on a simple memory management principle and on a set of memories of the same size which facilitates the implementation of such a delay line in the integrated circuit of a receiver during a routing locating phase well known to a man of skill in the art.

6

EP 1 532 748 B1

Secondly, thanks to the delay line, it has been possible to effectively delay one input signal relative to another signal without consuming too much energy or utilizing too much memory.

Actually, in practice, if the integrated circuit of the receiver RECEP is implemented with the CMOS 0.18 $\mu$m technology, the following comparisons may be obtained.

- It will be noted that for such technology the following formula is applied for estimating an energy consumption = (size of RAM in kbits/16)*((number of read accesses + number of write accesses) in meganumber of accesses/sec) *60*10$^{-6}$(60 $\mu$W/MHz for this technology) knowing that the 16 kbits RAM memory has a consumption of 60 $\mu$W/ Mega accesses/sec. Thus, with respect to the solution described in the prior art, whereas the energy consumption by the delay line of this prior art is of the order of 7 mW when the receiver is in the active mode and of the order of 210 $\mu$W in the standby mode, the energy consumption by the delay line according to the invention is 1.2 mW and 36 $\mu$W respectively (the ratio between the active mode and the standby mode being of the order of 3%) and this for a spread factor SF equal to 8, the spread factor being the number of chips in one symbol. In general, with this type of consumption, the delay line according to the invention will have better performance up to a spreading factor SF equal to 16 than the state of the art. For a higher spreading factor SF the consumption of the delay line according to the invention remains negligible, however, compared to the consumption of the integrated circuit of the receiver taken as a whole. Finally, the fact of having common read or write addresses for the delay line according to the invention permits to avoid a duplication of the data bus and address bus and, consequently, a corresponding reduction of the consumption.
- Compared with the solution described in the state of the art, whereas the memory used by the state of the art is a 54 kbits memory (18*32 bits*(512/4)), the memory of the first embodiment according to the invention is only 24 kbits (1*12 bis*512*4 areas).

Thirdly, the read access speed and write access speed in a memory are faster for the receiver RECEP according to the invention than for a receiver comprising a delay line according to the state of the art.

Actually, for the delay line according to the invention the read access speed is 30.72 MHz*6/8*3/4, whereas for the state of the art this is 3.84 MHz*3*6*1/SF and the write access speed is 30.72 MHz*1/8*4/4 and 3.84 MHz*3*6*1/SF respectively. The speed of access of the delay line according to the invention is always constant and 30.72 MHz as we have previously seen, whereas that of the delay line of the state of the art depends on the spreading factor SF.

Fourthly, thanks to the receiver according to the invention it is possible to manage the number of paths required by the UMTS standard, that is 6 paths. Obviously, it is also possible to manage fewer than 6 paths. This depends on the number of paths used by an initial signal. This number of paths is determined in a fashion known to a man of ordinary skill in the art via a search module (currently called searcher) placed before the delay line D_LINE.

Furthermore, although the UMTS standard does not so require, the receiver RECEP according to the invention can manage a 7th signal corresponding to a 7th path. As can be seen in Fig. 4, a 7th reading represented by reference X can effectively be carried out. In this case one writing and 7 readings take place in a delay line D_LINE in 4 clock cycles CLK.

Obviously, the scope of the invention is not at all restricted to the first embodiment described above and variations or modifications may be provided therein without, however, leaving the spirit and scope of the invention.

For example, in the case where the UMTS standard would evolve, there is provided to generate many more paths than the 7 paths considered.

Thus, it is often necessary to be able to manage 6 paths coming from a same first base station to which the mobile is connected, plus 2 additional paths coming from a second, different, base station for measures called SFN-SFN which permit to effect a continuous transfer from a first base station to which a mobile is connected to a second base station, this technique currently being called handover.

For this purpose, the receiver RECEP according to the invention could comprise two delay lines D_LINE such as previously defined, each having 4 memory areas of 512*12 bits, that is 48 kbits of memory. Fourteen different paths could thus be managed. However, in that case, the memory used as well as the place on the silicon would be considerable as well as the energy consumption for the integrated circuit of the receiver RECEP.

It could also be possible to augment the level of the reading frequency of the memory of the delay line. However, from a practical point of view, limits of technology are come close to.

Consequently, in order to be able to manage at least 8 paths without utilizing too much memory, according to a second embodiment the delay line D_LINE of the receiver RECEP is divided into two series BANK0 and BANK1 of delay sub-lines of 4 sub-lines each, that is 8 delay sub-lines ZONE0 to ZONE7 in all. With each of the delay sub-lines is associated a memory area of 256*12 bits each, which permits not to increase the overall size of the memory used. One delay sub-line ZONE is always accessible at a frequency of 30.72 MHz and 15 read accesses are possible every 8 clock cycles. The input frequency of the samples is always 15.36 MHz, corresponding to one clock cycle CLK.

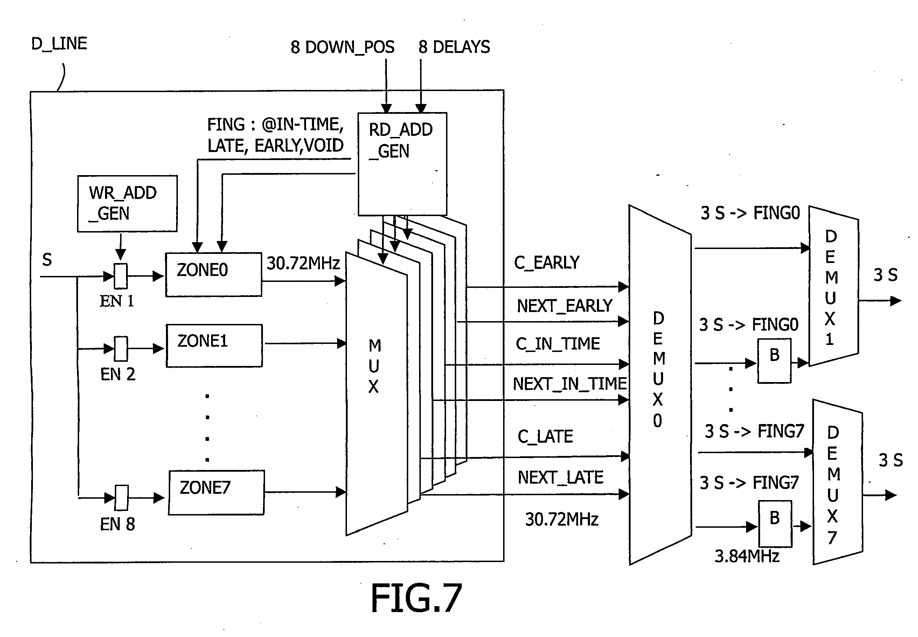

According to this second embodiment the delay line D_LINE preferably comprises, as illustrated in Fig. 7:

7

- always a write address generator WR_ADD_GEN intended to generate write addresses in the memory of the delay line D_LINE for the samples of a series of samples,
- always control means RD_ADD_GBN intended to generate read addresses for the samples in the delay line D_LINE from the series of samples of an input signal,
- 6 multiplexers MUX and
- 8 write registers REG.

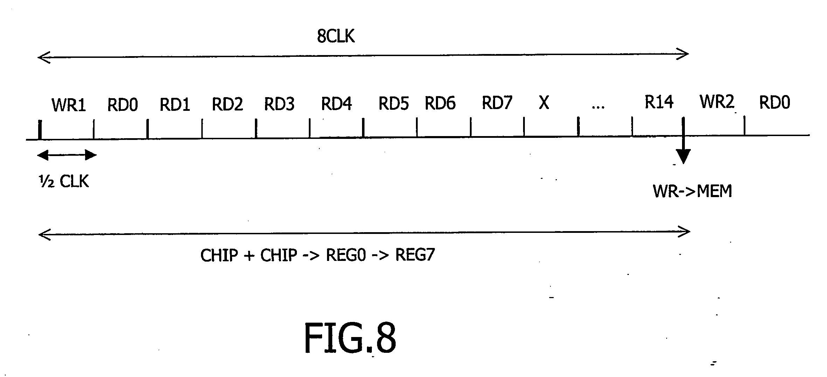

As shown in Fig. 8, in the example of 8 paths, there is one write access and there are 8 read accesses between 2 writings every 8 clock cycles CLK. Thus the samples of path FING will be read with a period of 8 clock cycles CLK.

Consequently, in a first step 1), when samples S arrive at the delay line D_LINE, 1 sample per clock cycle CLK, they are written in the write registers REG0 to REG7 respectively. One waits for 8 samples to have arrived and the write register REG store them in a memory for 8 clock cycles. It will be noted that in the 8 samples there are 2 series of 3 useful samples IN_TIME, EARLY and LATE corresponding to the reception of 2 successive chips CHIP.

In a second step 2), the writing of the 8 samples in the 8 delay sub-lines is effected as described previously for the first embodiment. Every 8 clock cycles CLK there will be a writing of a sample in each memory area ZONE, the writing taking place in parallel for all these areas. Thus, at a given address ADD the delay line D_LINE contains 8 samples.

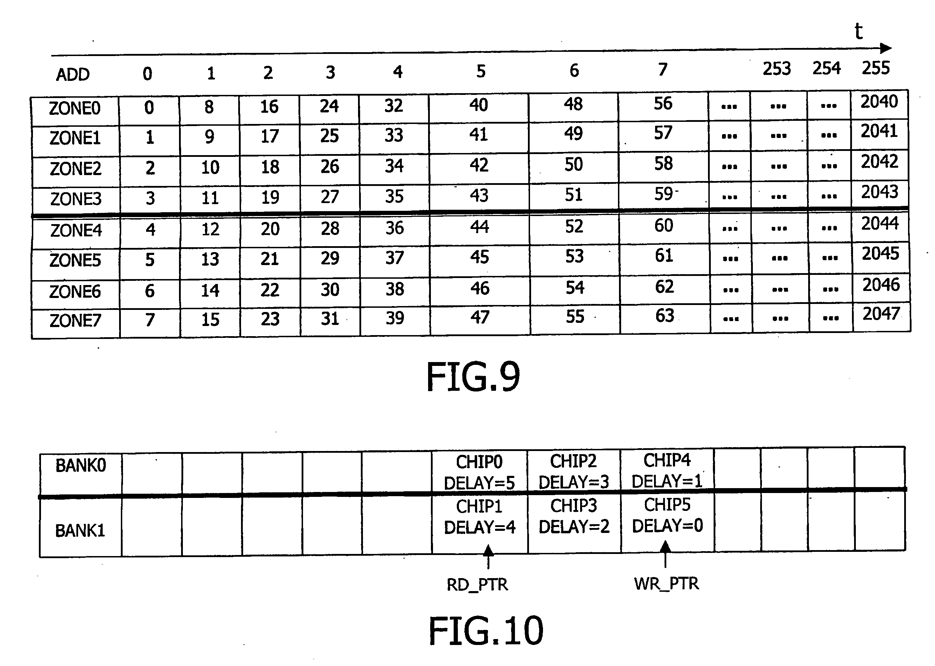

Fig. 9 shows an organization of the various delay sub-lines ZONE when they are filled by samples S. There are 2048 samples in all.

The 4 samples 0, 1, 2, 3 of the first chip received are written in the memory areas ZONE0 to ZONE3, whereas the next 4 samples of the second, chip received are written in the next memory areas ZONE4 to ZONE7. As can be seen, these 8 first samples are positioned at an address ADD = 0 of each memory area ZONE.

The same applies to the 8 samples received next, they are written at the address ADD = 1 in the 8 memory areas and so on up to 8 last samples 2040 to 2047 at the address ADD = 255 of the memory areas ZONE0 to ZONE8.

In 512 clock cycles CLK the memory areas are all filled.

In order to avoid having a read pointer RD_PTR that would point at an address ADD not comprising a sample, one advantageously waits for the whole delay line D_LINE i.e. all the memory areas ZONE to be filled by samples. To have a security margin, one preferably waits for a period of 2560 chips, 2560 chips representing a unit called slot known to a man of skill in the art.

It will be noticed that when two series of samples are received, they are written in the two series of memory areas BANK0 and BANK1 respectively.

**In a third step 3)**, the two series of samples are read so that the reference sample IN_TIME of these series have a delay $\tau$ on the output compared to the input, which delay represents the delay associated with a path FING, each delay associated with a path FING being known to the receiver RECEP.

It will be noted that, advantageously, the same delay sub-line ZONE comprises only a single useful sample among the 6 useful samples IN_TIME, EARLY and LATE coming from two successive chip series and that the useful samples of each chip are written at successive addresses in the memory areas ZONE. Consequently, it will be possible to read the 6 useful samples (3 per chip) via a single reading operation RD.

It will be recalled that a constraint posed of obtaining on the output of the delay D_LINE a sample chosen from four samples, that is of obtaining a sample at a frequency of 3.84 MHz, is always the same as that of the first embodiment. The samples of a path FING are read every 8 clock cycles. With this timing the samples cannot all leave the delay line D_LINE in time.

Consequently, for mitigating this problem, it is necessary to read 2 series of samples at the same time. Thus a first chip called current chip C_CHIP and a next chip called NEXT_CHIP are read in parallel.

The reading of the 6 useful samples of these 2 chips takes place on the basis of the following principles.

Firstly, the read addresses of the useful samples IN_TIME, EARLY and LATE of the 2 processed chips are determined.

As in the first embodiment, the delay of a path FING is represented by a shift between the write pointer WR_PTR and the read pointer RD_PTR, the latter being displaced in a cyclic manner in the series BANK0 and BANK1 of memory areas ZONE.

Thus, for each reference sample IN_TIME received, one has a read address @RD equal to its write address @WR minus the part of the delay $\tau$ associated with the corresponding path FING divided by 2, the delay of a path being known of the receiver RECEP.

$$@RD = [@W - Ent(\tau/2)] \; modulo \; 256.$$

For example, in Figs. 9 and 10, if the write pointer WR_PTR = 7 and if one wishes a delay of 5, the read pointer RD_PTR = 7-ent/5/2) = 5 and the reference chip CHIP0 will be obtained comprising the samples 40, 41, 42 and 43 or 44, 45, 46 and 47.

Secondly, the series BANK of areas in which the reference sample IN_TIME of the current chip C_CHIP is situated, also called current reference sample IN_TIME is determined. This reference sample IN_TIME may belong to either the first series of memory areas BANK0 or to the second series of memory areas BANK1.

For this purpose, selection means SELECT_BANK of memory area series are used for determining, as a function of the delay $\tau$ to which series BANK the read current chip belongs. Thus one has SELECT_BANK = not ($\tau$ modulo-2).

Consequently, according to that which has been observed under firstly and secondly, for the read address @RD of the current reference sample IN_TIME, one has:

- if the delay $\tau$ = 1, @RD = @W in the first series BANK0 of areas,
- if the delay $\tau$ = 2, @RD = @W-1 in a second series BANK1 of areas,
- if the delay $\tau$ = 3, @RD = @W-1 in the first series BANK0 of areas and
- if the delay $\tau$ = 4, @RD = @W-2 in the second series BANK1 of areas.

In the example with the write pointer WR_PTR = 7 and the delay of 5, one will have SELECT_BANK = not (5 modulo-2) = 0, or the first series BANK0.

Thirdly, the exact position of the reference sample IN_TIME of the current chip C_CHIP in the series BANK of areas of the selected memory is to be found and then the exact location of the associated preceding sample EARLY and following sample LATE.

This narrows down to selecting the proper memory area ZONE and determining the read addresses of the samples with respect to one another.

The position i.e. the memory area ZONE to which one such reference sample IN_TIME belongs is thus determined by a position factor DOWN_POS .

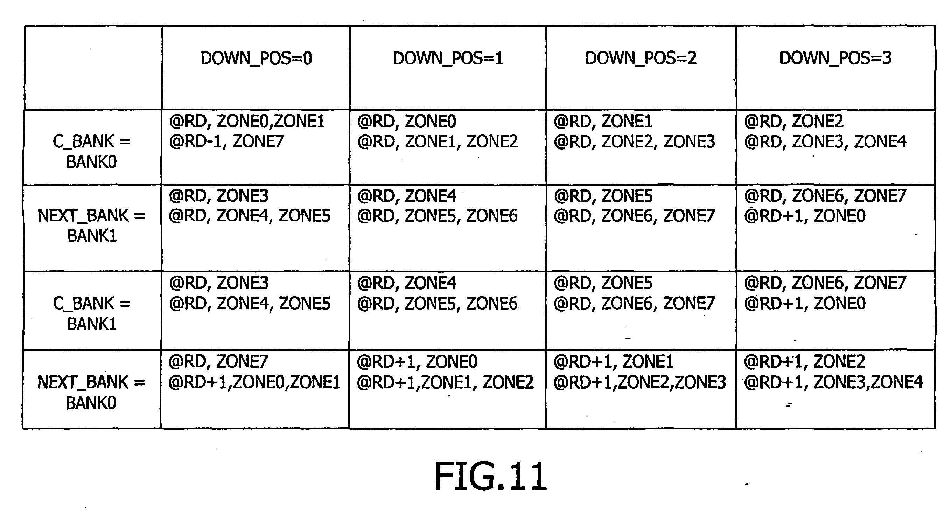

Thus, as the Table of Fig. 11 shows, according to the preceding example the series of memory areas which is selected for the current reference sample IN TIME is the first series BANK0, called in this case current series C_BANK and if the value of the position factor DOWN_POS is equal to 1, then the reading of the current reference sample IN_ TIME is made in the second area ZONE1, that of the next associated sample LATE in the third area ZONE2 and that of the associated preceding sample EARLY in the first zone ZONE0. In this case it may be observed that the addresses of the three samples are equal to @RD.

Having determined the addresses of the samples of the current chip C_CHIP, the addresses of the samples of the next chip NEXT_CHIP are then easily deduced from them by means of the Table of Fig. 11.

Thus, still according to the same example, the next reference sample IN_TIME will be read at an address @RD in the sixth zone ZONE5, the preceding sample EARLY and next sample LATE associated with a same address @RD in the fifth zone ZONE4 and seventh zone ZONE6 respectively.

Obviously, as for the first embodiment there is always a fourth sample VOID which is read for each of the chips.

According to a second example which represents a borderline case, if the series of memory areas selected for the current reference sample IN_TIME is the first series BANK0, called current series C_BANK in this case, and if the value of the position factor is equal to 0 then the reading of the current reference sample IN_TIME takes place in the first zone ZONE0, that of the next associated sample LATE in the second zone ZONE1 and that of the associated preceding sample EARLY in the preceding area, that is here the eighth area ZONE7 belonging to the second series BANK1. In this case it may be observed that the addresses of the current reference sample IN_TIME and of the next sample LATE are both equal to @RD, whereas the read address of the preceding sample EARLY is situated at a preceding address @RD-1.

For the next chip NEXT_CHIP the next reference sample IN_TIME will be read at an address @RD in the fifth area ZONE4, the associated preceding sample EARLY and next sample LATE at a same address @RD in the fourth area ZONE3 and sixth area ZONE5 respectively.

In the Table of Fig. 11 it may be seen that there are 3 other borderline cases when the addresses of three useful samples are not all equal and where the samples of a same chip do not all form part of the same series BANK of memory areas ZONE.

- when the position factor has a value equal to 3 and the current series of areas is the first series BANK0. At that moment the address @RD+1 of the next sample LATE of the next chip NEXT_CHIP is situated at an address +1 of that of the 2 other associated useful samples,
- when the position factor has a value equal to 3 and the current series of areas is the second series BANK1. At that moment the address @RD+1 of the next sample LATE of the current chip C_CHIP is situated at an address +1 of that of the 2 other associated useful samples, and

- when the position factor has a value equal to 0 and the current series of areas is the second series BANK1. At this moment the address @RD of the preceding sample EARLY of the next chip NEXT_CHIP is situated at an address -1 of that of the 2 other associated useful samples.

In practical manner, according to the principles set out above, let us imagine that we are at the write address @W = 10, that the delay $\tau$ is equal to 2 and that the position factor DOWN_POS has a value of 3. The samples of the 2 processed chips have numbers running from 100 to 107 for this write address 10 and from 92 to 99 for the write address 9, the numbers 92 and 100 being situated in the 1st area ZONEO and 99 and 107 in the 8th area ZONE7, as can be seen in the Table below.

|  | ADD |  | @9 | @10 |  |  |
|---|---|---|---|---|---|---|
| BANK0 | ZONE0 | ... | 92 | 100 | NEXT_CHIP |  |
| BANK0 | ZONE1 | ... | 93 | 101 | NEXT_CHIP |  |
| BANK0 | ZONE2 | ... | 94 | 102 | NEXT_CHIP |  |
| BANK0 | ZONE3 | ... | 95 | 103 | NEXT_CHIP |  |
| BANK1 | ZONE4 | ... | 96 | 104 | C_CHIP | DOWN_POS=0 |
| BANK1 | ZONE5 | ... | 97 | 105 | C_CHIP | DOWN_POS=1 |
| BANK1 | ZONE6 | ... | 98 | 106 | C_CHIP | DOWN_POS=2 |
| BANK1 | ZONE7 | ... | 99 | 107 | C_CHIP | DOWN_POS=3 |

The current chip C_CHIP is situated in the second series BANK1 and the reference sample IN_TIME is situated at the read address @RD = @9.

As the position factor has a value of 3, the read address of the current reference sample IN -TIME is situated in the 8th area ZONE7, that of the associated preceding sample EARLY in the 7th area ZONE6 and that of the associated next sample LATE in the 1st area ZONE0.

The read addresses of the useful samples EARLY, IN_TIME and LATE of the next chip NEXT_CHIP are situated at the address @10 in the 3rd, 4th and 5th areas ZONE2, ZONE3 and ZONE4 respectively.

**In a fourth step 4**), as illustrated in Fig. 7, the 8 samples read (2*IN_TIME, EARLY, LATE, VOID) are directed to the six multiplexers MUX. The latter choose the reference samples IN_TIME, preceding sample EARLY and next sample LATE of the current chip C_CHIP and of the next chip NEXT_CHIP respectively, as a function of the position factor DOWN_POS (see Table of Fig. 11), and redirects them to a first demultiplexer DEMUX0 always at the speed of 30.72 MHz.

The demultiplexer DEMUX0 defines as a function of the position factor DOWN_POS, the delay $\tau$ and the reading RD effected of such and such path FING, to which path FING each useful sample belongs, then it directs each useful sample to a set of delay switches B and demultiplexers DEMUX1 to 7 associated with each path FING.

At that moment the useful samples of a current chip C_CHIP are sent to the processor PROC of the management unit PROC+DEMOD of the receiver RECEP, whereas the useful samples of the next chip NEXT_CHIP are sent to the delay switches B to delay them by one chip (3.84 MHz) relative to the samples of the current chip C_CHIP).

Having identified and separated all the different samples received of the 8 input signals received according to the preceding steps, they are recombined in a coherent manner to recover common information.

In a fifth step 5), the processor PROC determines according to energy the reference samples IN_TIME of each path FING, then it directs each reference sample IN_TIME to a demodulator DEMOD associated with said path. Said demodulator DEMOD combines each sample IN_TIME with a code relating to the associated path FLING. Subsequently, all the reference samples IN_TIME are summed up to find back the common information.

In the example taken for the second embodiment, 8 paths are managed. Obviously, as one has been able to see in Fig. 8, this second embodiment advantageously has the capacity to manage up to 15 paths by utilizing a set of memory areas ZONE roughly (256*8) in size equal to that of (512*4) of the areas used in the first embodiment, of the invention, at a same frequency 30.72 MHz while being based on a system of equivalent complexity. This second embodiment utilizes just a little more multiplexers.

Obviously, the scope of the invention is not at all limited to the embodiments described above and variations or modifications may be made without, however, leaving the scope and spirit of the invention.

For example, the management of the memory areas ZONE in the second embodiment according to the invention can be simplified in the following manner.

If one looks at Fig. 11 one will notice that for a current series C_BANK of memory areas corresponding to a second series BANK1 and for a next series NEXT_BANK of memory areas corresponding to the second series BANK1, the read addresses of the useful samples are identical to one another for each equal value of the position factor DOWN-POS and that the memory areas for a series of samples read are also identical.

In like manner it is noticed that for a current series C_BANK of memory areas corresponding to the first series BANK0 and for a next series NEXT_BANK of memory areas corresponding to the first series BANK0, the memory areas for a series of samples read are also identical for each equal position factor value DOWN_POS.

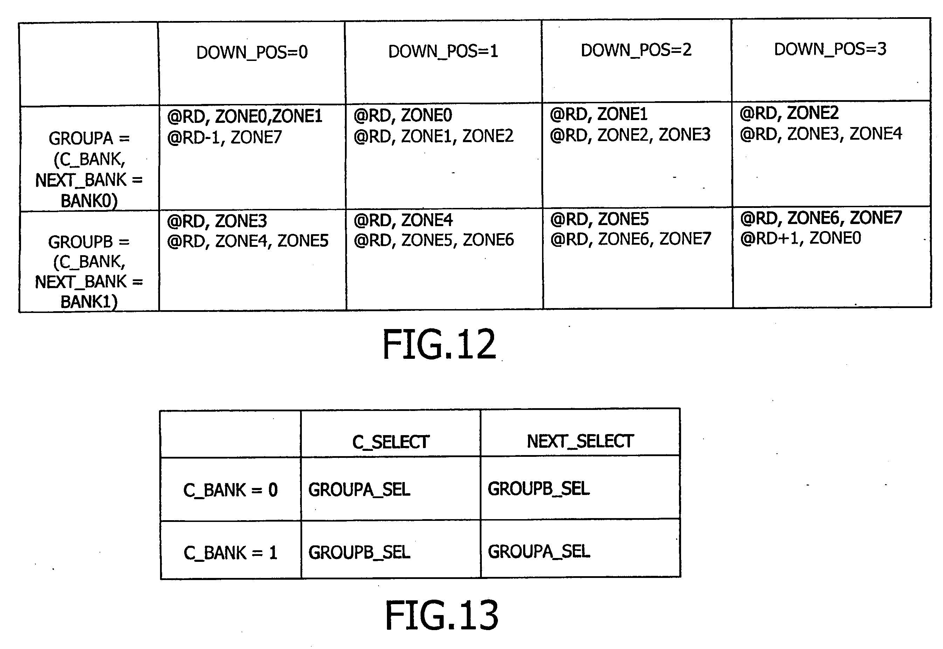

As a consequence, the memory areas ZONE are regrouped as a function of the two preceding remarks and two groups GROUPA and GROUPB as shown in the Table of Fig. 12. The first group GROUPA regroups a current series C_BANK and a next series NEXT_BANK corresponding both of them to the second series of delay sub-lines BANK, whereas the second group GROUPEB regroups a current series C_BANK and a next series NEXT_BANK, both of them corresponding to the second series of delay sub-lines BANK1.

Consequently, instead of choosing in a first period the series of memory areas in which current chip C_CHIP is situated, then selecting the proper memory areas ZONE of the current useful samples as a function of the value of the position factor DOWN_POS, the proper memory areas ZONE are selected as a function of the value of the position factor DOWN_POS in each of the two groups GROUPA, GROUPB after which the series of memory areas is selected in which the current chip C_CHIP is situated.

A position factor DOWN_POS = 1 and a delay $\tau$ = 5 are taken as an example. In a first period, according to the value of the position factor DOWN_POS, the corresponding memory areas are chosen in the first zone group GROUPA as well as the corresponding memory areas in the second zone group GROUPB. According to the Table of Fig. 12 the zones ZONE0, ZONE1, ZONE2 of the first group GROUPA are selected and the zones ZONE4, ZONB5, ZONE6 of the second group GROUPB are selected.

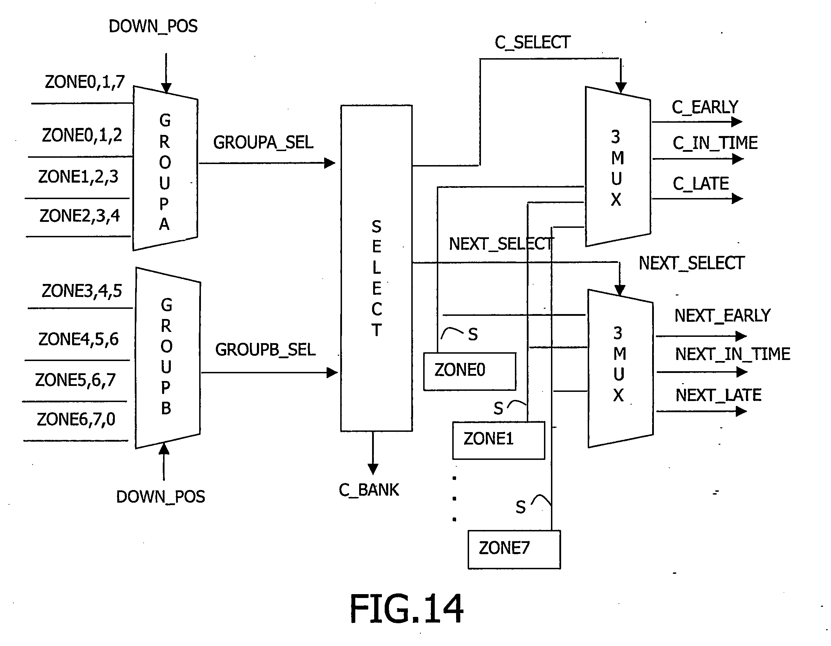

The choice of the memory areas is made by means of two commands GROUPA_SEL and GROUPB_SEL, illustrated in Fig. 14, which have the position factor DOWN_POS as an input parameter.

In a second period is determined the series BANK of areas in which the current chip C_CHIP is situated according to the formula

$$\text{SELECT\_BANK} = \text{not } (\tau \text{ modulo-2}).$$

Here the first series BANK0 of memory areas is the current series C_BANK.

In a third period, as a function of the Table of Fig. 13, it is determined to which chip the selected memory areas in the two groups GROUPA, GROUPB correspond, i.e. to the current chip C_CHIP or to the next chip NEXT_CHIP.

In our example, since the first series BANK0 is the current series, the memory areas ZONE0, ZONE1 and ZONE3 of the first group GROUPA correspond to the current chip C_CHIP, whereas the memory areas ZONE4, ZONE5 and ZONE6 of the second group GROUPB correspond to the next chip NEXT_CHIP.

In the opposite case, where it is a second series BANK1 of areas that is the current series, the reverse is obtained. The memory areas ZONE0, ZONE1 and ZONE3 of the first group GROUPA correspond to the next chip NEXT_CHIP, whereas the memory areas ZONE4, ZONE5 and ZONE6 of the second group GROUPB correspond to the current chip C_CHIP.

Thus there are two selection commands C_SELECT and NEXT_SELECT to select the current and next chips according to the chosen areas as indicated in Fig. 14.

In a third period, by means of 6 multiplexers MUX, the samples S of the 8 memory areas ZONEO to ZONE7 are recovered in accordance with the selected areas ZONE0, ZONE1, ZONE3 and ZONE4, ZONE5 and ZONE6 of the two groups GROUPA and GROUPB, so that the useful samples IN_TIME, EARLY and LATE can be found back. The 6 multiplexers MUX subsequently send the 3 useful samples of each current chip C_CHIP and next chip NEXT_CHIP at a frequency of 30.72 MHz to the first demultiplexer DEMUX0. Then one is in the same position again as the fourth step described earlier.

The steps described earlier are repeated for the samples of all the paths FING.

Thus, according to this first variant of embodiment of the second embodiment, in lieu of processing the memory areas represented in the Table of Fig. 11 16 times, only 8 processings represented in the Table of Fig. 12 will do.

Obviously, the invention is not restricted at all to the domain of mobile telephony, it may be extended to other domains notably to those that utilize an integrated circuit which necessitates a receiver or a delay line according to the invention, domains relating to video and notably to multimedia applications etc.

No reference sign in the present text is to be interpreted as limiting said text.

The verb "to comprise" and its conjugations must not be interpreted in a limiting fashion either. They must not be interpreted as excluding the presence of other steps or elements except for those defined in the description or also as excluding a plurality of steps or elements already listed after said verb and preceded by the indefinite article "a" or "an".

**Claims**

1. A receiver (RECEP) for receiving an input signal, wherein the input signal (INPUT) is sampled so as to generate a series of samples (IN_TIME, EARLY, LATE, VOID) corresponding to a chip of data (DATA), said receiver (RECEP) comprising one delay line (D_LINE), **characterized in that** the delay line (D_LINE) is intended to delay said input signal by a series of delays ($\tau$) and is divided into a series of delay sub-lines (ZONE) each intended to write one from the series of samples (IN_TIME, EARLY, LATE, VOID) of said input signal (INPUT), and **in that** the solution comprises control means (RD_ADD_GEN) intended to generate read addresses of the samples in the delay sub-lines (ZONE) from the series of samples (IN_TIME, EARLY, LATE, VOID) of the input signal (INPUT), so that a read address is equal to a difference between a write address of a sample in a delay sub-line (ZONE) of the input signal and a delay ($\tau$) expressed as a number of sampling periods from the series of delays ($\tau$), wherein the samples of a series of samples (IN_TIME, EARLY, LATE, VOID) are accessible in parallel in the write mode or read mode in the delay sub-lines (ZONE).

2. A receiver (RECEP) as claimed in claim 1, **characterized in that** the delay line comprises a single series of delay sub-lines.

3. A receiver (RECEP) as claimed in claim 1, **characterized in that** the delay line comprises various series (BANK) of delay sub-lines.

4. A receiver (RECEP) as claimed in one of the preceding claims 1 to 3, **characterized in that** a delay sub-line (ZONE) is accessible with a frequency twice as fast as the samples of an input signal received by the receiver (RECEP).

5. A receiver (RECEP) as claimed in one of the preceding claims 1 to 4, **characterized in that** one memory area is associated to one delay sub-line (ZONE).

6. A receiver (RECEP) as claimed in one of the preceding claims 1 to 5, **characterized in that** the read addresses of the samples of a series of samples (IN_TIME, EARLY, LATE, VOID) are situated at addresses immediately adjacent or equal to one another.

7. A receiver (RECEP) as claimed in one of the preceding claims 3 to 6, **characterized in that** two series of samples (C_CHIP, NEXT_CHIP) are read in parallel.

8. A receiver (RECEP) as claimed in the preceding claim 7, **characterized in that** the delay line (D_LINE) comprises selection means (SELECT_BANK) of a series (BANK) of delay sub-lines to which belongs one of the two series of samples read as a function of the delay ($\tau$).

9. A receiver (RECEP) as claimed in one of the preceding claims 1 to 8, **characterized in that** the delay line (DOLINE) comprises a position factor (DOWN_POS) indicating the position of a reference sample (IN_TIME) from a series of samples (IN_TIME, EARLY, LATE, VOID) of an input signal in the series of delay sub-lines to which it belongs.

10. A receiver (RECEP) as claimed in the preceding claim 7, **characterized in that** the memory areas (ZONE) are regrouped into a first and a second group (GROUPEA, GROUPEB), the first group regrouping a current series of current areas (C_BANK) and a next series of areas (NEXT_BANK) which can each correspond to the first series (BANKO) of delay sub-lines and the second group regrouping a current series of areas (C_BANK) and a next series of areas (NEXT BANK) which can each correspond to the second series (BANK1) of the delay sub-lines, so that the memory areas for a series of samples read are identical for each equal position factor value (DOWN POS).

11. A delay line (DOLINE) for delaying an input signal (INPUT), wherein the input signal (INPUT) is sampled so as to generate a series of samples (IN_TIME, EARLY, LATE, VOID) corresponding to a chip of data (DATA), **characterized in that** the delay line is intended to delay said input signal by a series of delays ($\tau$) and is divided into a series of delay sub-lines (ZONE) each intended to write one from the series of samples (IN_TIME, EARLY, LATE, VOID) of said input signal (INPUT), and **in that** the delay line comprises control means (RD ADD_GEN) intended to generate read addresses of the samples in the delay sub-lines (ZONE) from the series of samples (IN_TIME, EARLY, LATE, VOID) of the input signal (INPUT), so that a read address is equal to a difference between a write address of a sample in a delay sub-line (ZONE) of the input signal and a delay ($\tau$) expressed as a number of sampling periods of the series of delays ($\tau$), wherein the samples of a series of samples (IN_TIME, EARLY, LATE, VOID) of a chip quarter are accessible in parallel in the write mode or read mode in the delay sub-lines (ZONE).

12. A method of delaying an input signal (INPUT) by means of a delay line (D_LINE), wherein the input signal (INPUT) is sampled so as to generate a series of samples (IN_TIME, EARLY, LATE, VOID) corresponding to a chip of data (DATA), **characterized in that** it comprises the steps of : - dividing the delay line (D_LINE) into a series of delay sub-lines (ZONE) each intended to receive a sample from the series of samples (IN_TIME, EARLY, LATE, VOID) of the input signal (INPUT), said delay line being intended to delay said input signal by a series of delays ($\tau$), and - generating read addresses of the samples in the delay sub-lines (ZONE) from the series of samples of the input signal (INPUT), so that a read address is equal to a difference between a write address of a sample in a delay sub-line (ZONE) of the input signal and a delay ($\tau$) expressed as a number of sampling periods of the series of delays ($\tau$), wherein the samples of a series of samples (IN_TIME, EARLY, LATE, VOID) of a chip quarter are accessible in parallel in the write mode or read mode in the delay sub-lines (ZONE).

**Patentansprüche**

1. Empfänger (RECEP) zum Empfangen eines Eingangssignals, wobei das Eingangssignals (INPUT) abgetastet wird, um eine Reihe von Abtastungen (IN_TIME, EARLY, LATE, VOID) zu erzeugen, die einem Chip mit Daten (DATA) entsprechen, wobei besagter Empfänger (RECEP) eine Verzögerungsleitung (D_LINE) aufweist, **dadurch gekennzeichnet, dass** die Verzögerungsleitung (D_LINE) dafür vorgesehen ist, besagtes Eingangssignal mittels einer Reihe von Verzögerungen ($\tau$) zu verzögern, und in eine Reihe von Verzögerungs-Unterleitungen (ZONE) unterteilt ist, wobei jede dafür vorgesehen ist, eine der Abtastungen (IN_TIME, EARLY, LATE, VOID) der Eingangssignale (INPUT) zu schreiben, und dass die Lösung Steuermittel (RD_ADD_GEN) aufweist, die dafür vorgesehen sind, Leseadressen der Abtastungen in den Verzögerungs-Unterleitungen (ZONE) aus der Reihe von Abtastungen (IN_TIME, EARLY, LATE, VOID) des Eingangssignals (INPUT) zu erzeugen, so dass eine Leseadresse gleich einer Differenz ist zwischen einer Schreibadresse einer Abtastung in einer Verzögerungs-Unterleitung (ZONE) des Eingangssignals und einer Verzögerung ($\tau$), ausgedrückt als eine Anzahl von Abtastperioden besagter Reihe von Verzögerungen ($\tau$), wobei die Abtastungen einer Reihe von Abtastungen (IN_TIME, EARLY, LATE, VOID) im Schreibmodus oder Lesemodus in den Verzögerungs-Unterleitungen (ZONE) parallel zugänglich sind.

2. Empfänger (RECEP) nach Anspruch 1, **dadurch gekennzeichnet, dass** die Verzögerungsleitung eine einzelne Reihe von Verzögerungs-Unterleitungen aufweist.

3. Empfänger (RECEP) nach Anspruch 1, **dadurch gekennzeichnet, dass** die Verzögerungsleitung verschiedene Reihen (BANK) von Verzögerungs-Unterleitungen aufweist.

4. Empfänger (RECEP) nach einem der vorhergehenden Ansprüche 1 bis 3, **dadurch gekennzeichnet, dass** eine Veizögerungs-Unterleitung (ZONE) mit einer doppelt so großen Frequenz wie die Abtastungen eines Eingangssignals, das vom Empfänger (RECP) empfangen wird, zugänglich ist.

5. Empfänger (RECEP) nach einem der vorhergehenden Ansprüche 1 bis 4, **dadurch gekennzeichnet, dass** ein Speicherbereich in Zusammenhang mit einer Verzögerungs-Unterleitung (ZONE) steht.

6. Empfänger (RECEP) nach einem der vorhergehenden Ansprüche 1 bis 5, **dadurch gekennzeichnet, dass** die Leseadressen der Abtastungen einer Reihe von Abtastungen (IN_TIME, EARLY, LATE, VOID) bei Adressen angeordnet sind, die direkt benachbart oder einander gleich sind.

7. Empfänger (RECEP) nach einem der vorhergehenden Ansprüche 3 bis 6, **dadurch gekennzeichnet, dass** zwei Reihen von Abtastungen (C_CHIP, NEXT_CHIP) parallel ausgelesen werden.

8. Empfänger (RECEP) nach dem vorllergellenden Anspruch 7, **dadurch gekennzeichnet, dass** die Verzögerungsleitung (D_LINE) Auswahlmittel (SELECT_BANK) von einer Reihe (BANK) von Verzögerungs-Unterleitungen aufweist, zu denen eine oder zwei Reihen von Abtastungen gehören, die als eine Funktion der Verzögerung ($\tau$) gelesen werden.

9. Empfänger (RECEP) nach einem der vorhergehenden Ansprüche 1 bis 8, **dadurch gekennzeichnet, dass** die Verzögerungsleitung (DOLINE) einen Positionsfaktor (DOWN_POS) aufweist, der die Position einer Vergleicllsabtastung (IN_TIME) von einer Reihe von Abtastungen (IN_TIME, EARLY, LATE, VOID) eines Eingangssignals der Reihe von Verzögerungs-Unterleitungen anzeigt, zu der er gehört.

**10.** Empfänger (RECEP) nach dem vorhergehenden Anspruch 7, **dadurch gekennzeichnet, dass** die Speicherbereiche (ZONE) in eine erste und eine zweite Gruppe (GROUPEA, GROUPEB) umgruppiert werden, wobei die erste Gruppe eine aktuelle Reihe von aktuellen Bereichen (C_BANK) und eine nachfolgende Reihe von Bereichen (NEXT_BANK) umgruppiert, die jeweils der ersten Reihe (BANK0) von Verzögerungs-Unterieitungen entsprechen kann, und die zweite Gruppe eine aktuelle Reihe von aktuellen Bereichen (C_BANK) und eine nachfolgende Reihe von Bereichen (NEXT_BANK) umgruppiert, die jeweils der zweiten Reihe (BANK1) von Verzögerungs-Unterleitungen entsprechen kann, so dass die Speicherbereiche für eine Reihe von ausgelesenen Abtastungen identisch für jeden gleichen Positionsfaktorwert (DOWN POS) ist.

**11.** Verzögerungsleitung (DOLINE) zum Verzögern eines Eingangssignals (INPUT), wobei das Eingangssignal (INPUT) abgetastet wird, um eine Reihe von Abtastungen (IN_TIME, EARLY, LATE, VOID) zu erzeugen, die einem Chip mit Daten (DATA) entsprechen, **dadurch gekennzeichnet, dass** die Verzögerungsleitung dafür vorgesehen ist, besagtes Eingangssignal mittels einer Reihe von Verzögerungen (T) zu verzögern, und in eine Reihe von Verzögerungs-Unterleitungen (ZONE) unterteilt ist, wobei jede dafür vorgesehen ist, eine der Reihe von Abtastungen (IN_TIME, EARLY, LATE, VOID) besagten Eingangssignals (INPUT) zu schreiben, und dass die Lösung Steuermittel (RD_ADD_GEN) aufweist, die dafür vorgesehen sind, Leseadressen der Abtastungen in den Verzögerungs-Unterieitungen (ZONE) aus der Reihe von Abtastungen (IN_TIME, EARLY, LATE, VOID) des Eingangssignals (INPUT) zu erzeugen, so dass eine Leseadresse gleich einer Differenz ist zwischen einer Schreibadresse einer Abtastung in einer Verzögerungs-Unterleitung (ZONE) des Eingangssignals und einer Verzögerung (i), ausgedrückt als eine Anzahl von Abtastperioden besagter Reihe von Verzögerungen (T), wobei die Abtastungen einer Reihe von Abtastungen (IN_TIME, EARLY, LATE, VOID) eines Chipbereichs im Schreibmodus oder Lesemodus in den Verzögerungs-Unterleitungen (ZONE) parallel zugänglich sind.

**12.** Verfahren zur Verzögerung eines Eingangssignals (INPUT) mittels einer Verzögerungsleitung (D_LINE), wobei das Eingangssignal (INPUT) abgetastet wird, um eine Reihe von Abtastungen (IN_TIME, EARLY, LATE, VOID) zu erzeugen, die einem Chip mit Daten (DATA) entsprechen, **dadurch gekennzeichnet, dass** es die Schritte aufweist: - Unterteilen der Verzögerungsleitung (D-LINE) in eine Reihe von Verzögerungs-Unterleitungen (ZONE), wobei jede dafür vorgesehen ist, eine Abtastung der Reihe von Abtastungen (IN_TIME, EARLY, LATE, VOID) des Eingangssignals (INPUT) zu empfangen, besagte Verzögerungsleitung dafür vorgesehen ist, besagtes Eingangssignal durch eine Reihe von Verzögerungen (T) zu verzögern, und - Erzeugen von Leseadressen der Abtastungen in den Verzögerungs-Unterleitungen (ZONE) aus der Reihe von Abtastungen des Eingangssignals (INPUT), so dass eine Leseadresse gleich einer Differenz zwischen einer Schreibadresse einer Abtastung in einer Verzögerungs-Unterleitung (ZONE) des Eingangssignals und einer Verzögerung (T) ist, ausgedrückt als eine Anzahl von Abtastperioden besagter Reihe von Verzögerungen (T), wobei die Abtastungen einer Reihe von Abtastungen (IN_TIME, EARLY, LATE, VOID) eines Chipbereichs parallel im Schreibmodus oder Lesemodus in den Verzögerungs-Unterleitungen (ZONE) zugänglich sind.

## Revendications

**1.** Un récepteur (RECEPT) pour la réception d'un signal d'entrée, dans lequel le signal d'entrée (INPUT) est échantillonné de manière à générer une série d'échantillons (IN_TIME, EARLY, LATE, VOID) correspondant à un chip de données (DATA), ledit récepteur (RECEPT) comprenant une ligne de retard (D_LINE), **caractérisé en ce que** la ligne de retard (D_LINE) est conçue pour délayer ledit signal d'entrée d'une séries de retards (τ) et est divisée en une série de sous-lignes à retard (ZONE), chacune disposée pour l'écriture de l'un parmi la série d'échantillons ( IN_TIME, EARLY, LATE, VOID) dudit signal d'entrée, et **en ce que** la solution comporte des moyens de commande (RD_ADD_GEN) conçus générer des adresses de lecture des échantillons au sein des sous-lignes à retard (ZONE) à partir des séries d'échantillons (IN_TIME, EARLY, LATE, VOID) du signal d'entrée (INPUT), de telle manière qu'une adresse de lecture est égale à la différence entre l'adresse d'écriture d'un échantillon dans une sous-ligne à retard (ZONE) du signal d'entrée et un retard (τ) exprimé en un nombre de périodes d'échantillons de la série de retards (τ) , dans lesquels les échantillons d'une série d'échantillons (IN_TIME, EARLY, LATE , VOID) sont accessibles en parallèle dans le mode d'écriture ou le mode de lecture au sein des sous-lignes à retard (ZONE).

**2.** Un récepteur (RECEPT) tel que défini dans la revendication 1, **caractérisé en ce que** la ligne à retard comporte une seule série de sous-lignes à retard.

3. Un récepteur (RECEPT) tel que défini dans la revendication 1, **caractérisé en ce que** la ligne à retard comporte plusieurs séries (BANK) de sous-lignes à retard.

4. Un récepteur (RECEPT) tel que défini dans l'une quelconque des revendications 1 à 3 , **caractérisé en ce qu'**une sous ligne à retard (ZONE) est accessible à une fréquence double de celle des échantillons du signal d'entrée reçu par le récepteur (RECEPT).

5. Un récepteur (RECEPT) tel que défini dans l'une quelconque des revendications 1 à 4, **caractérisé en ce qu'**un espace mémoire est associé à une sous-ligne à retard (ZONE).

6. Un récepteur (RECEPT) tel que défini dans l'une quelconque des revendications 1 à 5, **caractérisé en ce que** les adresses de lecture des échantillons d'une série d'échantillons (IN_TIME, EARLY , LATE, VOID) sont disposées à des adresses immédiatement adjacentes ou égales les unes aux autres.

7. Un récepteur (RECEPT) tel que défini dans l'une quelconque des revendications 3 à 6, **caractérisé en ce que** deux séries d'échantillons ( C_CHIP, NEXT_CHiP) sont lues en parallèle.

8. Un récepteur (RECEPT) tel que défini dans la revendication 7 précédente, **caractérisé en ce que** la ligne de délai (D_LINE) comporte des moyens de sélection (SELECT_BANK) d'une série (BANK) de sous-lignes à retard à laquelle appartient l'une des deux séries d'échantillons lus en fonction du retard ($\tau$).

9. Un récepteur (RECEPT) tel que défini dans l'une quelconque des revendications 1 à 8, **caractérisé en ce que** la ligne à retard (DOLINE) comporte un facteur de position (DOWN_POS) indiquant la position de l'échantillon de référence (IN_TIME) d'une série d'échantillons (IN_TIME, EARLY, LATE, VOID) d'un signal d'entrée au sein des séries de sous-lignes à retard auxquelles il appartient.

10. Un récepteur (RECEPT) tel que défini dans la revendication 7 précédente, **caractérisé en ce** les espaces mémoires (ZONE) sont regroupés au sein d'un premier et second groupe (GROUPA, GROUPB), le premier groupe regroupant une série courante d'espaces courants (C_BANK) et une série suivante d'espaces (NEXT_BANK) qui peuvent chacune correspondre à la première série (BANKO) de sous-lignes à retard et le second groupe regroupant une série courante d'espace (C_BANK) et une série suivante d'espace (NEXT_BANK) qui correspondent chacune à la seconde série (BANK1) de sous-lignes à retard, de telle manière que les espaces mémoires pour une série d'échantillons lus sont identiques pour les valeurs identiques du facteur de position (DOWN POS).

11. Une ligne à retard (DOLINE) pour retarder un signal d'entrée (INPUT) , dans laquelle le signal d'entrée (INPUT) est échantillonné de manière à générer une manière une série d'échantillons (IN_TIME, EARLY, LATE, VOID) correspondant à un chip de données (DATA), **caractérisée en ce que** la ligne à retard est conçue pour retarder ledit signal d'entrée d'une série de retards ($\tau$) et est divisée en une série de sous-lignes à retard (ZONE), chacune conçue pour l'écriture de l'un parmi la série d'échantillons (IN_TIME, EARLY, LATE, VOID) dudit signal d'entrée, et **en ce que** la ligne à retard comporte des moyens de commande (RD_ADD_GEN) conçus pour générer des d'adresses de lecture des échantillons au sein des sous-lignes à retard (ZONE) à partir des séries d'échantillons (IN_TIME, EARLY, LATE, VOID) du signal d'entrée (INPUT), de telle manière qu'une adresse de lecture est égale à la différence entre l'adresse d'écriture d'un échantillon dans une sous-ligne à retard (ZONE) du signal d'entrée et un retard ($\tau$) exprimé en un nombre de périodes d'échantillons de la série de retards ($\tau$), dans lesquels les échantillons de la série d'échantillons (IN_TIME, EARLY, LATE , VOID) d'un quart de chip sont accessibles en parallèle dans le mode d'écriture ou le mode de lecture au sein des sous-lignes à retard (ZONE).

12. Une méthode de retard d'un signal d'entrée (INPUT) au moyen d'une ligne à retard (D_LINE), dans laquelle le signal d'entrée (INPUT) est échantillonné de manière à générer une manière une série d'échantillons (IN_TIME, EARLY, LATE, VOID) correspondant à un chip de données (DATA), **caractérisée en ce qu'**elle comporte les étapes :

   - diviser la ligne à retard (D_LINE) en une série de sous-lignes à retard (ZONE), chacune conçue pour recevoir un parmi la série d'échantillons ( IN_TIME, EARLY, LATE, VOID) du signal d'entrée (INPUT), ladite ligne à retard étant conçue pour retarder le signal d'entrée d'une série de délais ($\tau$) , et
   - générer des adresses de lecture des échantillons au sein des sous-lignes à retard (ZONE) à partir de la série d'échantillons du signal d'entrée (INPUT), de telle manière qu'une adresse de lecture est égale à la différence entre l'adresse d'écriture d'un échantillon dans une sous-ligne à retard (ZONE) du signal d'entrée et un retard (τ) exprimé en un nombre de périodes d'échantillons de la série de retards (τ), dans lesquels les échantillons de la série d'échantillons (IN_TIME, EARLY, LATE , VOID) d'un quart de chip sont accessibles en parallèle dans le mode d'écriture ou le mode de lecture au sein des sous-lignes à retard (ZONE).

FIG.1

RECEP

INPUT

PROC+
DEMOD

D-LINE

PROC+
DEMOD

PROC+
DEMOD

FIG.2

FIG.3

FIG.4

EP 1 532 748 B1

| | DOWN_POS=0 | | | DOWN_POS=1 | | | DOWN_POS=2 | | | DOWN_POS=3 | |
|---|---|---|---|---|---|---|---|---|---|---|---|---|
| ZONE0 | | IN_TIME | | | EARLY | | | | | | | LATE |
| ZONE1 | | LATE | | | IN_TIME | | | EARLY | | | | |
| ZONE2 | | | | | LATE | | | IN_TIME | | | EARLY | |
| ZONE3 | EARLY | | | | | | | LATE | | | IN_TIME | |

## FIG.5

| | DOWN_POS=0 | DOWN_POS=1 | DOWN_POS=2 | DOWN_POS=3 |
|---|---|---|---|---|
| @RD: ZONE0 | @RD | @RD | @RD | @RD+1 |
| @RD: ZONE1 | @RD | @RD | @RD | @RD |
| @RD: ZONE2 | @RD | @RD | @RD | @RD |
| @RD: ZONE3 | @RD-1 | @RD | @RD | @RD |

## FIG.6

EP 1 532 748 B1

FIG.7

8CLK

| WR1 | RD0 | RD1 | RD2 | RD3 | RD4 | RD5 | RD6 | RD7 | X | ... | R14 | WR2 | RD0 |

½ CLK

WR->MEM

CHIP + CHIP -> REG0 -> REG7

# FIG.8

EP 1 532 748 B1

t →

| ADD | 0 | 1 | 2 | 3 | 4 | 5 | 6 | 7 | 253 | 254 | 255 |
|---|---|---|---|---|---|---|---|---|---|---|---|
| ZONE0 | 0 | 8 | 16 | 24 | 32 | 40 | 48 | 56 | ... | ... | ... | 2040 |
| ZONE1 | 1 | 9 | 17 | 25 | 33 | 41 | 49 | 57 | ... | ... | ... | 2041 |
| ZONE2 | 2 | 10 | 18 | 26 | 34 | 42 | 50 | 58 | ... | ... | ... | 2042 |
| ZONE3 | 3 | 11 | 19 | 27 | 35 | 43 | 51 | 59 | ... | ... | ... | 2043 |
| ZONE4 | 4 | 12 | 20 | 28 | 36 | 44 | 52 | 60 | ... | ... | ... | 2044 |
| ZONE5 | 5 | 13 | 21 | 29 | 37 | 45 | 53 | 61 | ... | ... | ... | 2045 |
| ZONE6 | 6 | 14 | 22 | 30 | 38 | 46 | 54 | 62 | ... | ... | ... | 2046 |
| ZONE7 | 7 | 15 | 23 | 31 | 39 | 47 | 55 | 63 | ... | ... | ... | 2047 |

## FIG.9

| BANK0 | | | | | | CHIP0 DELAY=5 | CHIP2 DELAY=3 | CHIP4 DELAY=1 | | | | |
|---|---|---|---|---|---|---|---|---|---|---|---|---|
| BANK1 | | | | | | CHIP1 DELAY=4 | CHIP3 DELAY=2 | CHIP5 DELAY=0 | | | | |

RD_PTR      WR_PTR

## FIG.10

|  | DOWN_POS=0 | DOWN_POS=1 | DOWN_POS=2 | DOWN_POS=3 |
|---|---|---|---|---|
| C_BANK = BANK0 | @RD, ZONE0,ZONE1 @RD-1, ZONE7 | @RD, ZONE0 @RD, ZONE1, ZONE2 | @RD, ZONE1 @RD, ZONE2, ZONE3 | @RD, ZONE2 @RD, ZONE3, ZONE4 |
| NEXT_BANK = BANK1 | @RD, ZONE3 @RD, ZONE4, ZONE5 | @RD, ZONE4 @RD, ZONE5, ZONE6 | @RD, ZONE5 @RD, ZONE6, ZONE7 | @RD, ZONE6, ZONE7 @RD+1, ZONE0 |
| C_BANK = BANK1 | @RD, ZONE3 @RD, ZONE4, ZONE5 | @RD, ZONE4 @RD, ZONE5, ZONE6 | @RD, ZONE5 @RD, ZONE6, ZONE7 | @RD, ZONE6, ZONE7 @RD+1, ZONE0 |
| NEXT_BANK = BANK0 | @RD, ZONE7 @RD+1,ZONE0,ZONE1 | @RD+1, ZONE0 @RD+1,ZONE1, ZONE2 | @RD+1, ZONE1 @RD+1,ZONE2,ZONE3 | @RD+1, ZONE2 @RD+1, ZONE3,ZONE4 |

<p align="center">FIG.11</p>

EP 1 532 748 B1

|  | DOWN_POS=0 | DOWN_POS=1 | DOWN_POS=2 | DOWN_POS=3 |
|---|---|---|---|---|
| GROUPA = (C_BANK, NEXT_BANK = BANK0) | @RD, ZONE0,ZONE1 @RD-1, ZONE7 | @RD, ZONE0 @RD, ZONE1, ZONE2 | @RD, ZONE1 @RD, ZONE2, ZONE3 | @RD, ZONE2 @RD, ZONE3, ZONE4 |
| GROUPB = (C_BANK, NEXT_BANK = BANK1) | @RD, ZONE3 @RD, ZONE4, ZONE5 | @RD, ZONE4 @RD, ZONE5, ZONE6 | @RD, ZONE5 @RD, ZONE6, ZONE7 | @RD, ZONE6, ZONE7 @RD+1, ZONE0 |

## FIG.12

|  | C_SELECT | NEXT_SELECT |
|---|---|---|
| C_BANK = 0 | GROUPA_SEL | GROUPB_SEL |
| C_BANK = 1 | GROUPB_SEL | GROUPA_SEL |

## FIG.13

C_EARLY

C_IN_TIME

C_LATE

3 MUX

C_SELECT

NEXT_SELECT

NEXT_EARLY

NEXT_IN_TIME

NEXT_LATE

3 MUX

NEXT_SELECT

ZONE0

S

ZONE1

S

ZONE7

S

. . .

SELECT

C_BANK

GROUPA_SEL

DOWN_POS

GROUP A

ZONE0,1,7

ZONE0,1,2

ZONE1,2,3

ZONE2,3,4

GROUPB_SEL

GROUP B

ZONE3,4,5

ZONE4,5,6

ZONE5,6,7

ZONE6,7,0

DOWN_POS

FIG.14

**EP 1 532 748 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20010002919 A